# EUROPEAN PATENT SPECIFICATION

(11) **EP 4 181 486 B1**
(45) Date of publication and mention of the grant of the patent: **30.07.2025**
(21) Application number: 21841835.8
(22) Date of filing: 11.01.2021
(51) Int. Cl.: H04M 1/02, H04M 1/03, H04R 1/28, G06F 1/16, H04R 1/26

(54) **ELECTRONIC DEVICE COMPRISING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN SOUPLE

(30) Priority: 13.07.2020 KR 20200086188
(43) Date of publication of application: 17.05.2023
(73) Proprietor: Samsung Electronics Co., Ltd., Suwon-si, Gyeonggi-do 16677 (KR)
(72) Inventor: KANG, Jooyoung, Suwon-si Gyeonggi-do 16677 (KR); KWAK, Myunghoon, Suwon-si Gyeonggi-do 16677 (KR); AN, Jungchul, Suwon-si Gyeonggi-do 16677 (KR); JEON, Heuisoo, Suwon-si Gyeonggi-do 16677 (KR); KIM, Kwangtai, Suwon-si Gyeonggi-do 16677 (KR); YEOM, Donghyun, Suwon-si Gyeonggi-do 16677 (KR)
(74) Representative: Gulde & Partner
(86) International application number: PCT/KR2021/000318
(87) International publication number: WO 2022/014807

(56) References cited:
- WO-A1-2019/184732
- WO-A1-2020/020061
- KR-A- 20180 040 797
- KR-A- 20190 113 128
- KR-A- 20190 127 184
- KR-A- 20200 072 056
- US-A1- 2010 210 310

## Description

### [Technical Field]

Various embodiments of the present invention relate to arrangement of a two-way speaker and a speaker hole of an electronic device having a flexible display.

### [Background Art]

An electronic device may include at least one or more acoustic components, for example, a microphone or a speaker, in a main body housing, and at least one or more holes for the acoustic component may be formed.

Typically, the speaker mounted in the electronic device includes speaker holes mainly disposed at a top and/or a bottom due to limitation of the mounting space of the main body housing.

Document (US 2010/210310 A1) discloses a conventional slide type portable device and document (KR20190113128 A) discloses a conventional electronic device with a slidable display. Document (WO 2019/184732 A1) discloses an electronic device with a conventional two-way speaker.

### [Disclosure of Invention]

### [Technical Problem]

However, an electronic device may reduce speaker performance, by covering at least one or more speaker holes if the electronic device is held with both hands, in a display landscape mode.

Meanwhile, an electronic device having a slidable or rollable type display may be disadvantageous in mounting a speaker and forming a speaker hole due to a mounting structure of a driving unit for inserting or extracting the display disposed in the main body housing to expand the display.

Various embodiments of the present invention are to prevent speaker performance deterioration due to holding with both hands, in an electronic device having a flexible display, for example, a slidable or rollable display, in a landscape mode of the electronic device, if the display is opened, by adding a speaker hole in a side/bottom direction of a main body housing.

Various embodiments of the present invention may provide a speaker volume boost effect while a display is opened, by adding a two-way speaker and a speaker hole to a main body housing.

Various embodiments of the present invention may improve speaker performance in a low band if a speaker sound path has high straightness with a radiation direction of a speaker diaphragm, and may improve speaker performance in a high band if the speaker sound path has low straightness with the speaker diaphragm, by adding a two-way speaker and a speaker hole to a main body housing.

### [Solution to Problem]

The present invention is defined by the appended set of claims.

### [Advantageous Effects of Invention]

According to various embodiments of the present invention, speaker performance deterioration due to holding a main body housing with both hands may be avoided, in a display landscape mode of an electronic device having a rollable display.

According to various embodiments of the present invention, speaker performance of an electronic device may be improved with increase of speaker holes.

According to various embodiments of the present invention, a speaker volume boost effect may be provided.

According to various embodiments of the present invention, speaker performance may be improved in a low band if a speaker sound path has high straightness with a radiation direction of a speaker diaphragm, and speaker performance may be improved in a high band if the speaker sound path has low straightness with the speaker diaphragm.

### [Brief Description of Drawings]

FIG. 1 is a perspective view illustrating an electronic device in a closed state according to various embodiments of the present invention.
FIG. 2A is a plan view of an electronic device shown in FIG. 1.
FIG. 2B is a rear view of an electronic device shown in FIG. 1.
FIG. 2C is a front view of an electronic device shown in FIG. 1.
FIG. 3 is a plan view illustrating an electronic device in an open state according to various embodiments of the present invention.
FIG. 4 is a view illustrating an electronic device in a closed state according to various embodiments of the present invention, which is a partial cross-sectional view taken along a line A-A' of FIG. 2A.
FIG. 5 is a view illustrating an electronic device in an open state according to various embodiments of the present invention, which is a partial cross-sectional view taken along a line B-B' of FIG. 3.
FIG. 6 is a bottom view illustrating an electronic device in an open state according to various embodiments of the present invention.
FIG. 7 is a perspective view illustrating a rear surface of an electronic device in an open state according to various embodiments of the present invention.
FIG. 8A and FIG. 8B are perspective views each illustrating a two-way speaker according to various embodiments of the present invention.
FIG. 9A is a partial cross-sectional view illustrating a two-way speaker according to various embodiments of the present invention.
FIG. 9B is a cross-sectional view illustrating a two-way speaker according to various embodiments of the present invention.
FIG. 10 is a cross-sectional view illustrating an electronic device in a closed state according to other various embodiments of the present invention.
FIG. 11 is a bottom view illustrating an electronic device in a closed state according to other various embodiments of the present invention.
FIG. 12 is a cross-sectional view illustrating an electronic device in an open state according to other various embodiments of the present invention.
FIG. 13 is a bottom view illustrating an electronic device in an open state according to other various embodiments of the present invention.
FIG. 14 is a perspective view illustrating a rear surface of an electronic device in an open state according to other various embodiments of the present invention.
FIG. 15 is a perspective view illustrating a two-way speaker according to various embodiments of the present invention.
FIG. 16A and FIG. 16B are exemplary views each illustrating a speaker hole arrangement shape according to various embodiments of the present invention.
FIG. 17 is a perspective view illustrating a rear surface of an electronic device in a sliding-in state according to various embodiments of the present invention.
FIG. 18 is a perspective view illustrating a rear surface of an electronic device in a sliding-out state according to various embodiments of the present invention.
FIG. 19A is a perspective view schematically illustrating a speaker sound path of an electronic device in a sliding-in state according to various embodiments of the present invention.
FIG. 19B is a perspective view schematically illustrating a speaker sound path of an electronic device in a sliding-out state according to various embodiments of the present invention.

### [Best Mode for Carrying out the Invention]

Hereinafter, various embodiments of the present disclosure are disclosed with reference to the attached drawings. However, it should be understood that this is not intended to limit the present disclosure to specific embodiments, but to cover various modifications, equivalents, and/or alternatives of the embodiments of the present disclosure. In relation to descriptions of the drawings, like reference numerals may be used for similar components.

An electronic device according to various embodiments of the present disclosure, for example, an electronic device may include at least one of a smart phone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MPEG 3 (MP3) player, a medical equipment, a camera, or a wearable device (e.g., smart glasses, a head-mounted-device (HMD), an electronic garment, an electronic bracelet, an electronic necklace, an electronic appcessory, an electronic tattoo, a smart mirror, or a smart watch).

In some embodiments, the electronic device may be a smart home appliance. The smart home appliance may include at least one of, for example, a television, a digital video disk (DVD) player, an audio, a refrigerator, an air-conditioner, a cleaner, an oven, a microwave oven, a washing machine, an air cleaner, a set-top box, a home automation control panel, a security control panel, a TV box (e.g., Samsung HomeSync^{™}, Apple TV^{™} or Google TV^{™}), a game console (e.g., Xbox^{™}, PlayStation^{™}), an electronic dictionary, an electronic key, a camcorder, or an electronic frame.

In other embodiment, the electronic device may include at least one of various medical devices (e.g., various portable medical measuring devices (a blood sugar measuring device, a heartbeat measuring device, a blood pressure measuring device, or a body temperature measuring device, etc.), magnetic resonance angiography (MRA), magnetic resonance imaging (MRI), computed tomography (CT), a scanning machine, or an ultrasonic wave device, etc.), a navigation device, a global positioning system (GPS) receiver, an event data recorder (EDR), a flight data recorder (FDR), a vehicle infotainment device, marine electronic equipment (e.g., a marine navigation device, a gyro compass, etc.), avionics, a security device, an automotive head unit, an industrial or home robot, an automated teller machine (ATM) of a financial institution, a point of sales (POS) of a store, or an Internet of things (IoT) device (e.g., a light bulb, various sensors, an electricity or gas meter, a sprinkler device, a fire alarm, a thermostat, a street light, a toaster, sports equipment, a hot water tank, a heater, a boiler, etc.).

According to an embodiment, the electronic device may include at least one of a portion of furniture or building/construction, an electronic board, an electronic signature receiving device, a projector, or various measuring devices (e.g., water supply, electricity, gas, or electric wave measuring device). In various embodiments, the electronic device may be a combination of one or more of the various devices described above. According to an embodiment, the electronic device may be a flexible electronic device. In addition, an electronic device according to an embodiment of the present disclosure is not limited to the foregoing devices, and may include a new electronic device according to technological development.

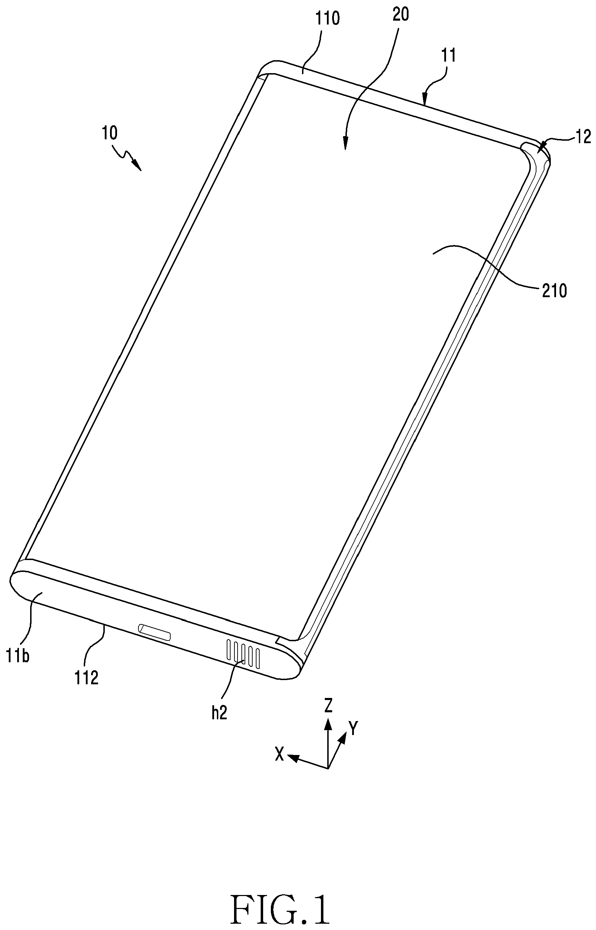

In describing an electronic device 10 with reference to FIG. 1 through FIG. 3, an orthogonal coordinate system may be used. In the orthogonal coordinate system, an X axis may indicate a horizontal direction of the electronic device 10, a Y axis may indicate a vertical direction of the electronic device 10, and a Z axis may indicate a thickness direction of the electronic device 10.

Referring to FIG. 1 through FIG. 3, the electronic device 10 according to an embodiment may include a main body housing 11, a support frame 12, and a flexible display 20. According to an embodiment, the electronic device 10 may be changed in a display area of the flexible display 20 as the support frame 12 moves from the main body housing 11. For example, the movement of the support frame 12 may include sliding movement, in parallel with the main body housing 11.

According to an embodiment, the flexible display 20 may include a first display area 210 which is always exposed if the support frame 12 is closed in the main body housing 11, and the flexible display 20 may include a second display area 212 which is extended and exposed in addition to the first display area 210 if the support frame 12 is opened in the main body housing 11. According to an embodiment, the second display area 212 is optional, and may be exposed or hidden depending on the movement of the support frame 12.

According to an embodiment, the support frame 12 is a structure for supporting the flexible display 20, and may be moved from the main body housing 11 to be opened, and may be moved toward the main body housing 11 to be closed. For example, the open state and the closed state of the support frame 12 may be implemented automatically or semi-automatically.

According to an embodiment, at least a part of the support frame 12 is disposed to overlap with at least a part of the main body housing 11, and may perform sliding movement while maintaining a horizontal state from the main body housing 11. The support frame 12 in the closed state may slide in a direction ④ away from the main body housing 11, and the support frame 12 in the open state may slide in a direction ⑤ toward the main body housing 11. For example, the closed state of the support frame 12 may be referred to as a sliding-in state, and the open state of the support frame 12 may be referred to as a sliding-out state. The support frame 12 may include a flat portion in at least a part to evenly support the flexible display 20.

According to an embodiment, the main body housing 11 may include a first plate 110, a second plate 112, and a plurality of first side members 11a through 11c. According to an embodiment, the first plate 110 may be disposed to face a first direction ①, and the second plate 112 may be disposed to face a second direction ② opposite to the first direction ①. According to an embodiment, the plurality of the first side members 11a through 11c may be disposed to face a third direction ③ which is perpendicular to the first and second directions ① and ②.

According to an embodiment, the main body housing 11 may form first side speaker holes h1 in the side member 11a at the top, and may form second side speaker holes h2 in the side member 11b at the bottom. For example, only one of the first and second side speaker holes h1 and h2 may be formed in the side member 11a and 11b of the main body housing 11.

According to an embodiment, the support frame 12 is the support structure for supporting the flexible display 20, and may stably support the flexible display 20, if it is opened in the closed state or closed in the open state. For example, the support frame may be referred to as a bracket, a housing or a case.

According to an embodiment, the flexible display 20 is a slidable or rollable display, and may be connected to the support frame 12 with one end, and may be connected to the main body housing 11 with the other end. Although not depicted, the main body housing 11 may include a rolling driving unit, to roll a part of the rolled flexible display 20 or to release the rolling state. For example, the rolling driving unit may include a driving motor which is not shown, and a motor control unit. One end of the flexible display 20 may be connected to the driving motor, to be rolled by the driving of the driving motor, or to be unfolded in the rolled state.

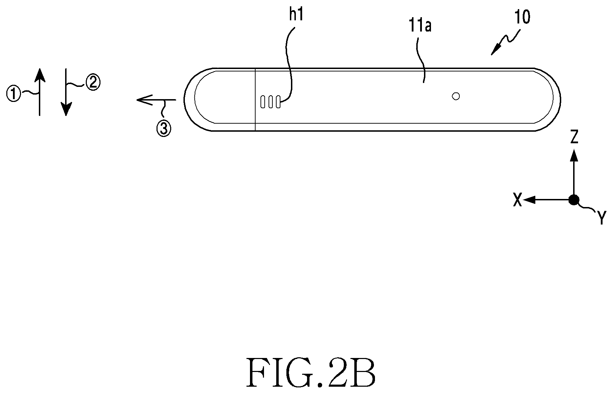

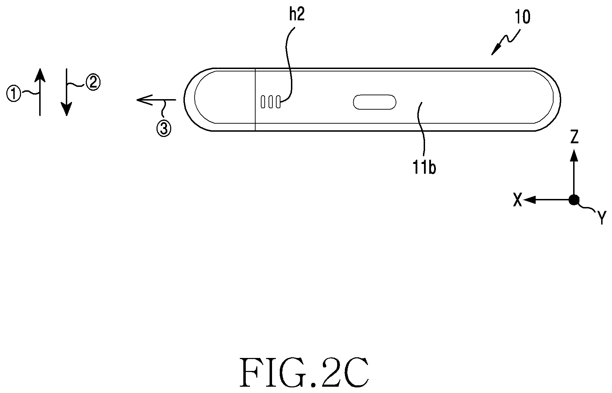

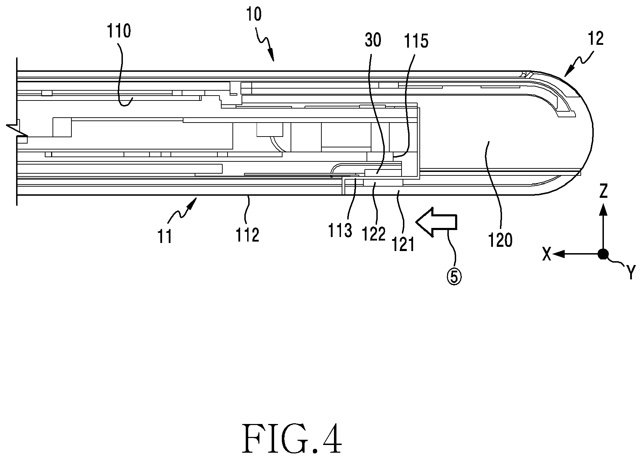

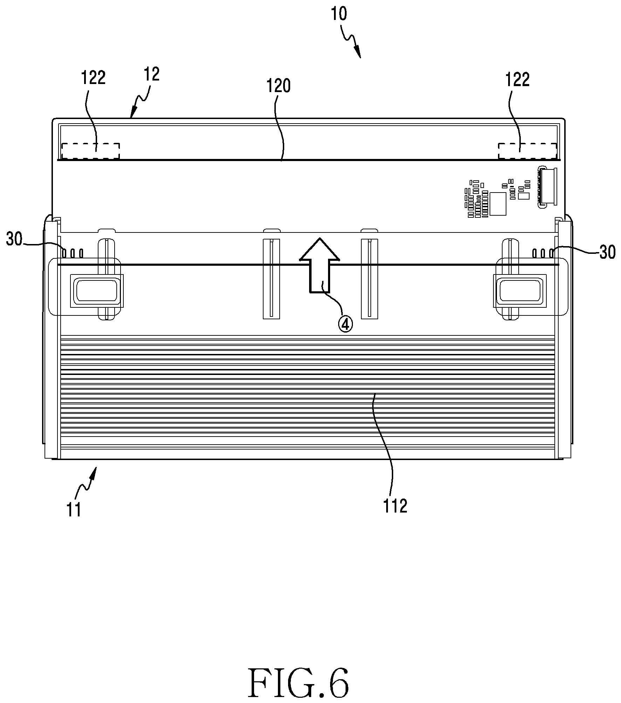

Referring to FIG. 4 through FIG. 7, an electronic device 10 according to an embodiment may be the same electronic device 10 as the electronic device 10 shown in FIG. 1 through FIG. 3. According to an embodiment, the electronic device 10 may include at least one or more two-way speakers 115 disposed in a main body housing 11, for emitting sound in a third direction (the third direction ③ shown in FIG. 2B) and a second direction (e.g., the second direction ② shown in FIG. 2B). According to an embodiment, the two-way speaker 115 is a speaker for emitting the sound produced from a speaker vibrating unit in two directions, and may be disposed alone, or symmetrically in the main body housing 11. According to an embodiment, the two-way speaker 115 may be symmetrically disposed in the main body housing 11, and may be formed adjacent to an upper side member (e.g., the side member 11a shown in FIG. 2B) and/or a lower side member (e.g., the side member 11b shown in FIG. 2C). According to an embodiment, the embodiment in which the speaker vibrating unit is disposed to face the second direction ② has been illustrated, but the two-way speaker 115 is not limited to this arrangement structure and the speaker vibrating unit may be disposed to face the third direction ③. Hereafter, the two-way speaker 115 shall be referred to as a speaker.

According to an embodiment, the electronic device 10 may form at least one or more second speaker holes 30 in addition to first and second side speaker holes (e.g., the first and second side speaker holes h1 and h2 shown in FIG. 2B and FIG. 2C) to direct the sound emitted from the speaker 115 out of the main body housing. According to an embodiment, the second speaker hole 30 may be formed symmetrically on a second plate 112, and may be formed adjacent to an upper side member (e.g., the side member 11a shown in FIG. 2B) and/or a lower side member (e.g., the side member 11b shown in FIG. 2C).

According to an embodiment, the main body housing 11 may open or close the at least one or more second speaker holes 30 formed in a first area a1 of the second plate 112 according to a movement of a support frame 12. According to an embodiment, the second speaker hole 30 may be opened and closed by a first portion 121 of the support frame 12. According to an embodiment, with the support frame 12 closed in the main body housing 11, the second speaker hole 30 may overlap the first portion 121 and the second speaker hole 30 may be closed by the first part 121, and with the support frame 12 opened in the main body housing 11, the second speaker hole 30 may be opened.

According to an embodiment, a first area 113 may be recessed in the first direction ① from the second plate 112, and the recessed first area 113 may be opened or closed depending on the movement of the first portion 121.

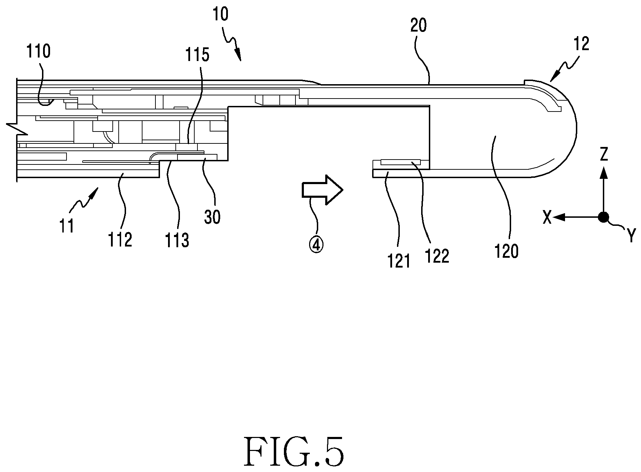

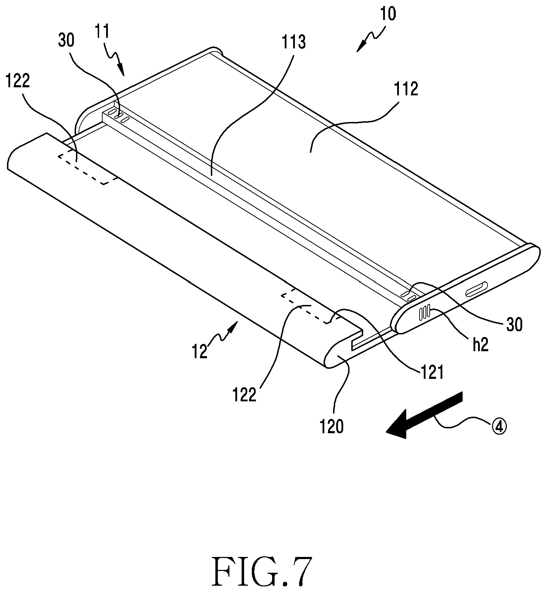

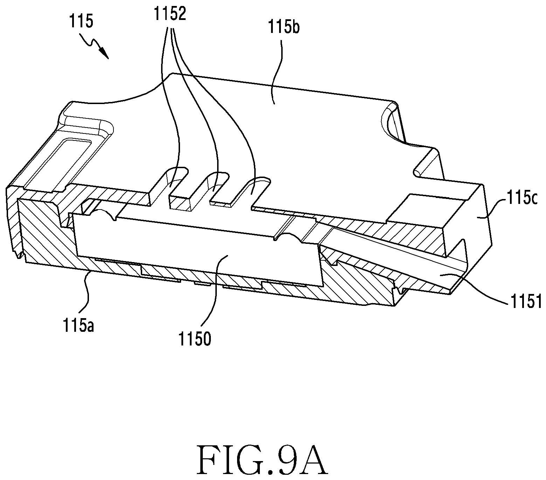

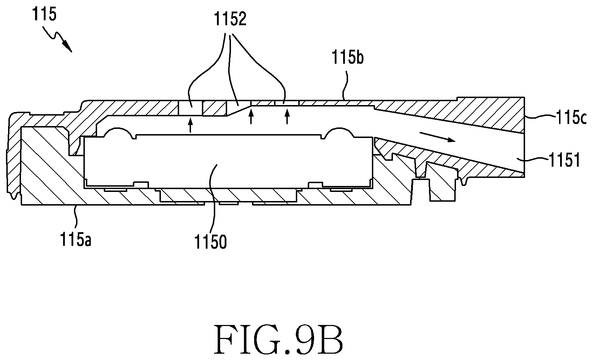

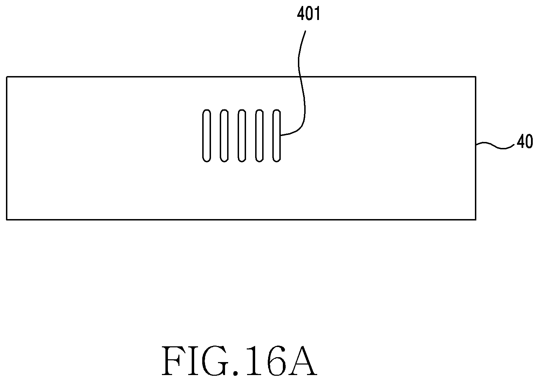

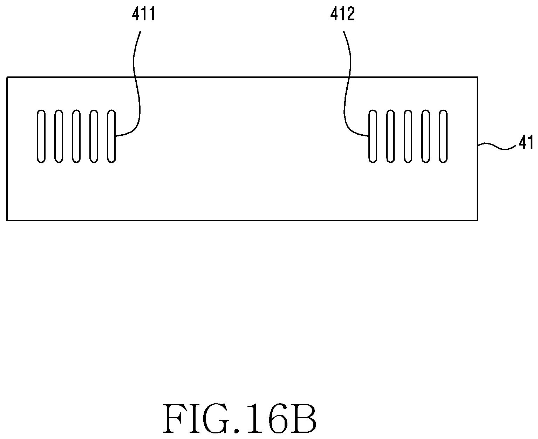

Referring to FIG. 16A and 16B, according to an embodiment, a plurality of at least one or more second speaker holes 401; 411, and 412 (e.g., the second speaker hole 30 shown in FIG. 7) may be formed in a recessed first area 40 (e.g., the first area 113 shown in FIG. 5 or a first area 114 of a side member shown in FIG. 9). According to an embodiment, the plurality of the second speaker holes may be disposed in the center of the first area 40 (e.g., 401) or on both sides (e.g., 411 and 412).

Referring back to FIG. 4 through FIG. 7, the support frame 12 according to an embodiment may include a housing-shaped receiving portion 120 which protrudes in the second direction ②. According to an embodiment, the receiving portion 120 has a plurality of electronic components therein, and may move toward the main body housing 11 to face it, or away from the main body housing 11 depending on whether the support frame 12 moves. According to an embodiment, the first portion 121 is formed in the receiving portion 120, and may protrude from the receiving portion 120 toward the main body housing 11.

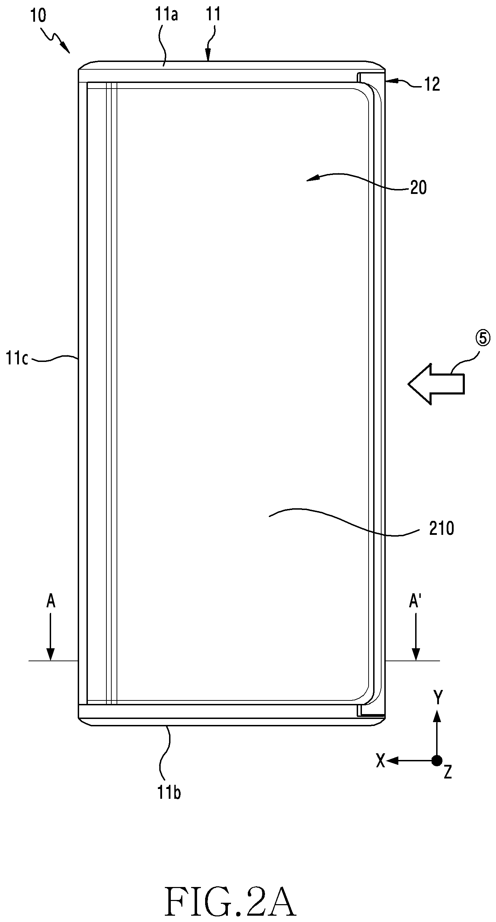

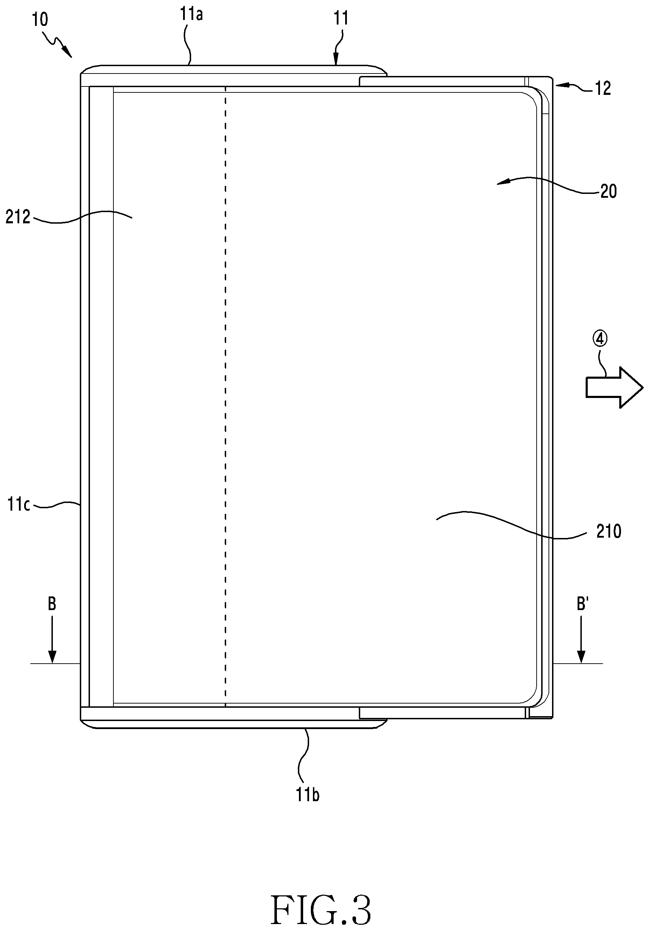

According to an embodiment, the sound through the plurality of the speaker holes 30 may be emitted in the second direction ②, and the direction of the sound may be perpendicular to the sliding movement direction of the support frame 12, for example, the closing direction (e.g., an arrow ⑤ shown in FIG. 2A) or the opening direction (e.g., an arrow ④ shown in FIG. 3).

According to an embodiment, if the support frame 12 is opened from the main body frame 11 and the left side is gripped by one hand, the sound of the left speaker is relatively low and accordingly a grip sensor (not shown) disposed on the side member of the main body housing 11 may adjust left and right sound balance by increasing the left speaker output, and a specific speaker boosting effect may be provided according to the vertical orientation.

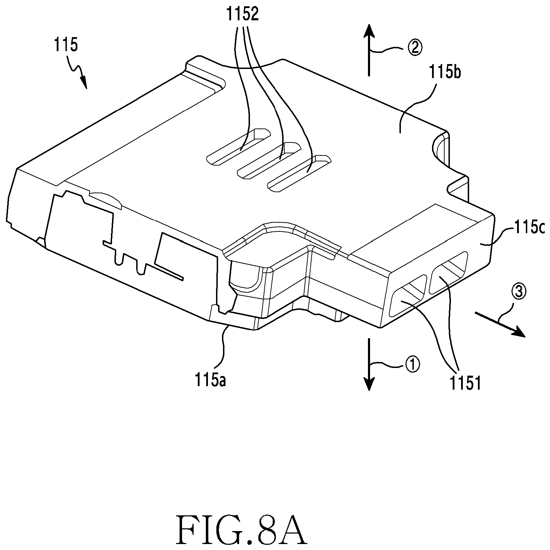

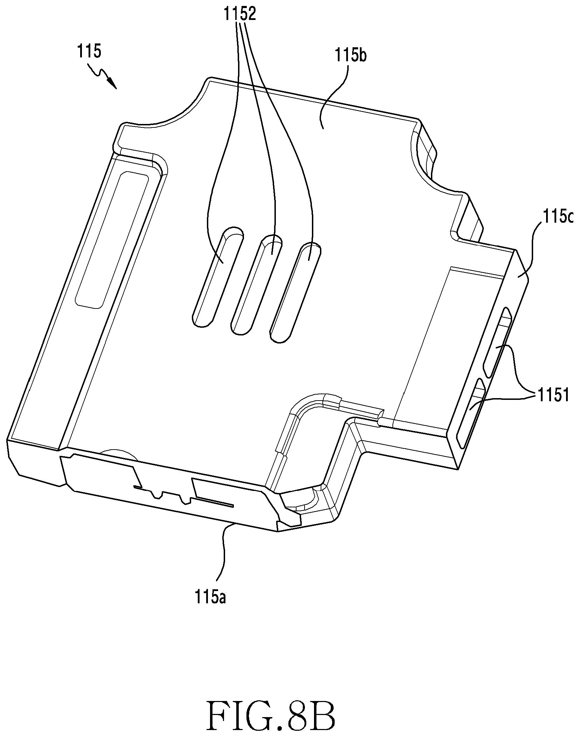

Referring to FIG. 8A through FIG. 9, a structure of a speaker disposed in an electronic device according to an embodiment will be described.

Referring to FIG. 8A through FIG. 9, a speaker 115 (e.g., the speaker 115 shown in FIG. 4) according to an embodiment may include a first surface 115a facing a first direction ①, a second surface 115b facing a second direction ② opposite to the direction ①, and a side surface 115c facing a third direction ③ perpendicular to the first and second directions ① and ②. According to an embodiment, the speaker 115 may include first openings 1151 formed on the side surface 115c to emit the sound in the third direction ③, and second openings 1152 formed on the second surface 115b to emitting the sound in the direction ②.

According to an embodiment, the first direction ① may be a direction in which the front of the main body housing (e.g., the main body housing 11 shown in FIG. 7) faces, the second direction ② may be a direction in which the back of the main body housing faces, and the third direction ③ may be a direction in which the main body housing side member faces. According to an embodiment, the speaker 115 may produce the sound of the speaker 115 in the third direction ③, that is, toward the main body housing side surface 115c, and may produce the sound in the second direction ②, that is, toward the back of the main body housing. According to an embodiment, the first opening 1151 may be a pair of holes extending linearly and may be formed in a duct structure, and the second opening 1152 may have a structure including three holes.

According to an embodiment, if the electronic device (e.g., the electronic device 10 shown in FIG. 7) slides out, the sound produced at a speaker core unit 1150 (e.g., a diaphragm) may be emitted toward the first opening 1151 and the second opening 1152. According to an embodiment, among the sound produced at the speaker core unit 1150, the sound emitted toward the second opening 1152 may be effective in a low-band sound situation, because its sound path is relatively straight. According to an embodiment, the sound emitted through the first opening 1151 of the speaker 115 may travel to outside of the side member of the main body housing through first and second speaker holes (e.g., the first and second side speaker holes h1 and h2 shown in FIG. 7), and the sound emitted through the second opening 1152 may travel to outside of the bottom surface of the main body housing through third speaker holes (e.g., the speaker holes 30 shown in FIG. 7).

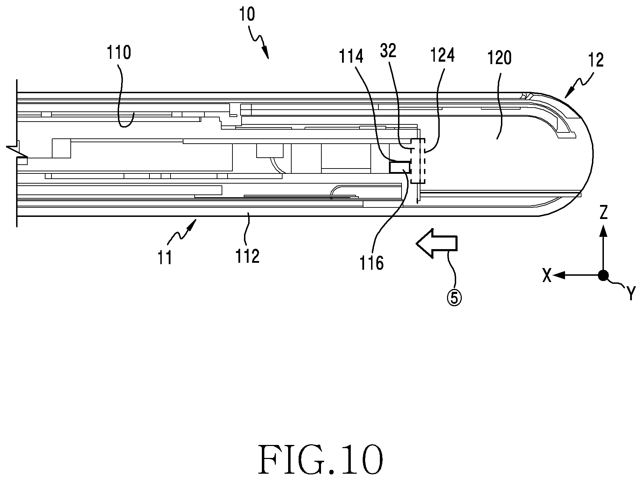

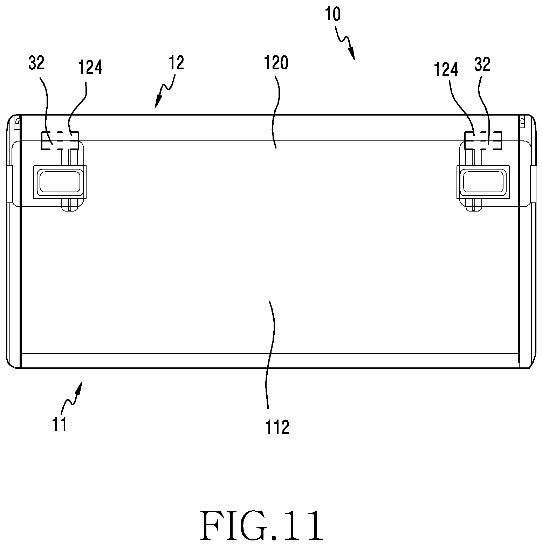

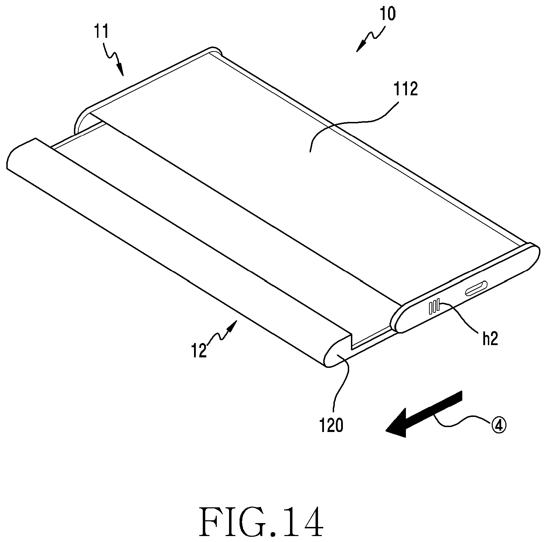

Referring to FIG. 10 through FIG. 14, an electronic device 10 according to an embodiment may be the same electronic device 10 as the electronic device 10 shown in FIG. 1 through FIG. 3. According to an embodiment, the electronic device 10 may include at least one or more two-way speakers 116 disposed in a main body housing 11, for emitting sound in a third direction (the third direction ③ shown in FIG. 2B) and a fourth direction perpendicular to the third direction. According to an embodiment, the two-way speaker 116 is a speaker which may emit the sound produced from a speaker vibrating unit in two directions, and may be disposed alone, or symmetrically in the main body housing 11. According to an embodiment, the two-way speaker 116 may be disposed symmetrically in the main body housing 11, and may be disposed adjacent to an upper side member (e.g., the side member 11a shown in FIG. 2B) and/or a lower side member (e.g., the side member 11b shown in FIG. 2C). According to an embodiment, the embodiment in which the speaker vibrating unit is disposed to face the second direction ② has been illustrated but the two-way speaker 116 is not limited to this arrangement structure, and the speaker vibrating unit may be disposed to face the third direction ③. Hereafter, the two-way speaker 116 shall be referred to as a speaker.

According to an embodiment, the electronic device 10 may include at least one or more second speaker holes 32 in addition to first and second speaker holes (e.g., the first and second side speaker holes h1 and h2 shown in FIG. 2B and FIG. 2C) to direct sound produced from the speaker 116 to outside of the main body housing. According to an embodiment, the second speaker hole 32 may be formed alone or symmetrically in a side member 114, and may be formed adjacent to an upper side member (e.g., the side member 11a shown in FIG. 2B) and/or a lower side member (e.g., the side member 11b shown in FIG. 2C).

According to an embodiment, the electronic device 10 may include at least one or more second speaker holes 32 in the side member 114 which is opened and closed, among a plurality of side members 11a through 11c and 114 in the main body housing 11. According to an embodiment, the side member 114 in which the at least one or more second speaker holes 32 are formed may be opened and closed by a first portion 124 of a support frame 12, and may be opened and closed according to whether the support frame 12 moves.

According to an embodiment, the side member 114 in which the at least one or more second speaker holes 32 are formed may extend from a second plate 112 in the vertical direction, and may be interposed between first and second plates 110 and 112. For example, the side member 114 may be disposed in a vertical wall shape on the second plate 112.

According to an embodiment, the main body housing 11 may include a receiving space s surrounded by the first and second plates 110 and 112 and the side member 114 including the speaker hole 32. The receiving space s is open in one direction and closed in the other directions, and may accommodate a receiving portion 120 of the support frame 12.

The support frame 12 according to an embodiment may include the receiving portion 120 protruding in the second direction ②. According to an embodiment, a plurality of electronic components may be disposed in the receiving portion 120, which may closely face or move away from the main body housing 11 depending on whether the support frame 12 moves. According to an embodiment, the first portion 124 may be formed in the receiving portion 120, and may face the side member 114 on which at least one speaker is formed. According to an embodiment, the first portion 124 may be disposed in the receiving portion 120 in a vertical blocking wall structure. For example, if the support frame 12 is closed in the main body housing 11, the at least one or more second speaker holes 32 may be disposed at least very close to or in contact with the first portion 124, to be closed by the first portion 124.

According to an embodiment, if the support frame 12 is closed in the main body housing 11, the side member 114 having at least one or more speaker holes formed thereon may contact the first portion 124 face-to-face. According to an embodiment, sound through the at least one or more speaker holes 32 may travel in the third direction ③ (e.g., the third direction ③ shown in FIG. 2B and FIG. 2C), and may travel in the fourth direction ④ in which the support frame 12 is opened.

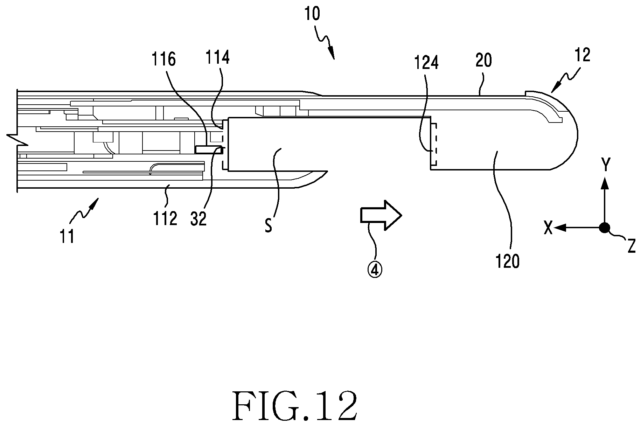

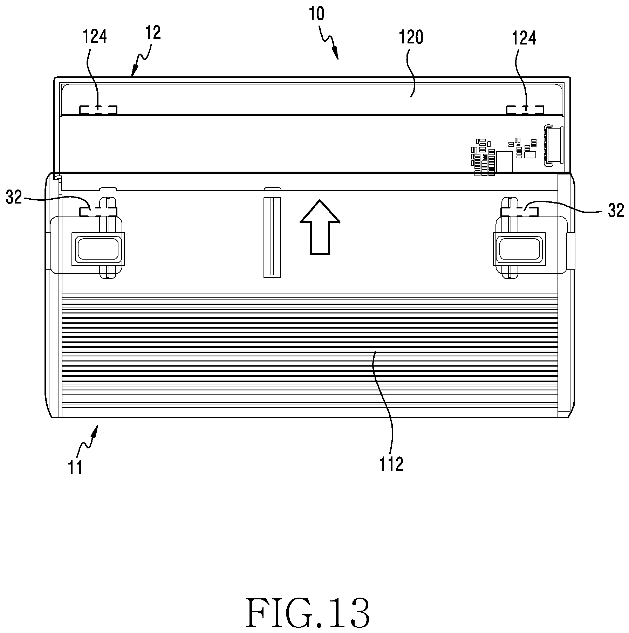

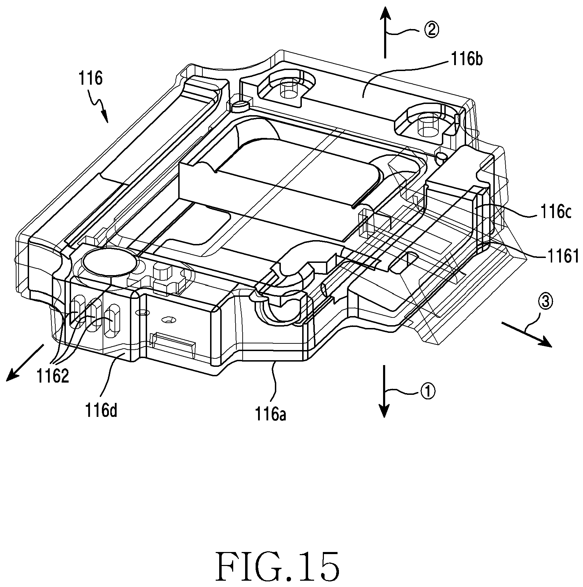

Referring to FIG. 15, a speaker 116 (e.g., the speaker 116 shown in FIG. 12 and FIG. 13) according to an embodiment may include a first surface 116a facing a first direction ①, a second surface 116b facing a second direction ② which is opposite to the first direction ①, and a plurality of side surfaces 116c and 116d facing a third direction ③ perpendicular to the first and second directions ① and ②. According to an embodiment, the speaker 116 may include first openings 1161 formed on the first side surface 116c, among the plurality of the side surfaces 116c and 116d, for emitting sound in the third direction ③, and second openings 1162 formed on the second side surface 116d adjacent to the first side surface 116c to emit sound in a fourth direction ④ which is different from the third direction ③. For example, the third direction ③ and the fourth direction ④ may be perpendicular to each other.

According to an embodiment, the first direction ① may be a direction in which a main body housing front faces, the second direction ② may be a direction in which the back of the main body housing faces, and the third and fourth directions ③ and ④ may be directions in which the side members of the main body housing face respectively. According to an embodiment, the speaker 116 may produce the sound of the speaker 116 in the third and fourth directions ③ and ④, that is, toward the first and second side surfaces 116c and 116d of the main body housing respectively. According to an embodiment, the first and second openings 1161 and 1162 are a pair of holes extending linearly, and may be formed in a duct structure.

According to an embodiment, if the electronic device slides out, sound produced from a speaker core unit (e.g., a diaphragm) may be emitted toward the first opening 1161 and the second opening 1162. According to an embodiment, the sound emitted through the first opening 1161 of the speaker may travel to outside of the side member of the main body housing through first and second speaker holes (e.g., the first and second speaker holes h1 and h2 shown in FIG. 7), and the sound emitted through the second opening 1152 may travel to outside of other side member of the main body housing through the second speaker holes 32.

Referring to 16A and FIG. 16B, according to an embodiment, a plurality of at least one or more speaker holes 401; 4011, and 412 may be formed in a recessed first region 40 (e.g., the first area 113 shown in FIG. 5 or the first area 114 of the side member shown in FIG. 9). According to an embodiment, the plurality of the speaker holes may be disposed in the center of the first area 40 (e.g., 401) or on both sides (e.g., 411 and 412).

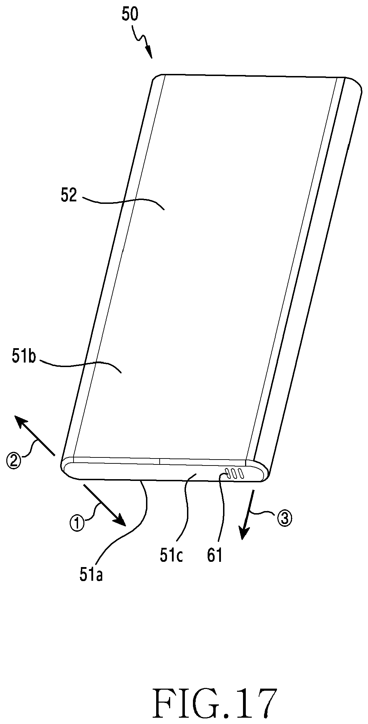

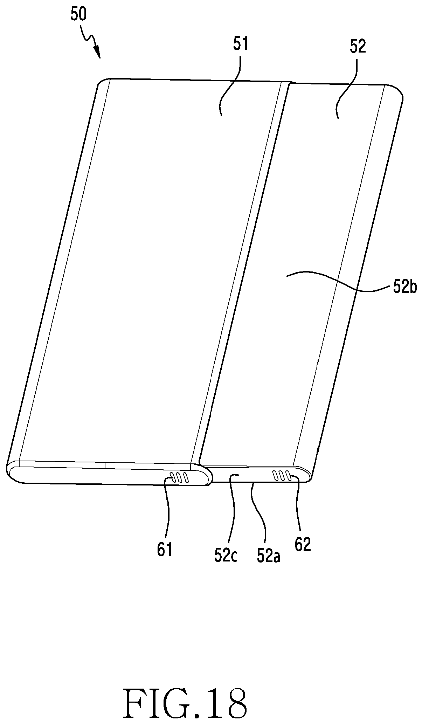

Referring to FIG. 17 and FIG. 18, an electronic device 50 according to an embodiment may be the same electronic device as the electronic device 10 shown in FIG. 1. According to an embodiment, the electronic device 50 may include a main body housing 51, and a support frame 52. According to an embodiment, the support frame 52 may slide in the main body housing 51 to be inserted or extracted.

According to an embodiment, the main body housing 51 may include a first surface 51a facing a first direction ①, a second surface 51b facing a second direction ② opposite to the first direction ①, and a plurality of first side surfaces 51c facing a vertical direction from the first and second directions ① and ②. According to an embodiment, the support frame 52 may include a third surface 52a facing the first direction ①, a fourth surface 52b facing the second direction ② opposite to the first direction ①, and a plurality of second side surfaces 52c facing the vertical direction from the first and second directions ① and ②.

According to an embodiment, the main body housing 51 may include at least one or more first speaker holes 61 including a speaker therein, and transmitting a sound produced from the speaker to outside of the main body housing 51. According to an embodiment, the support frame 52 may include at least one or more second speaker holes 62 to transmit the sound produced from the speaker to the outside of the main body housing 51.

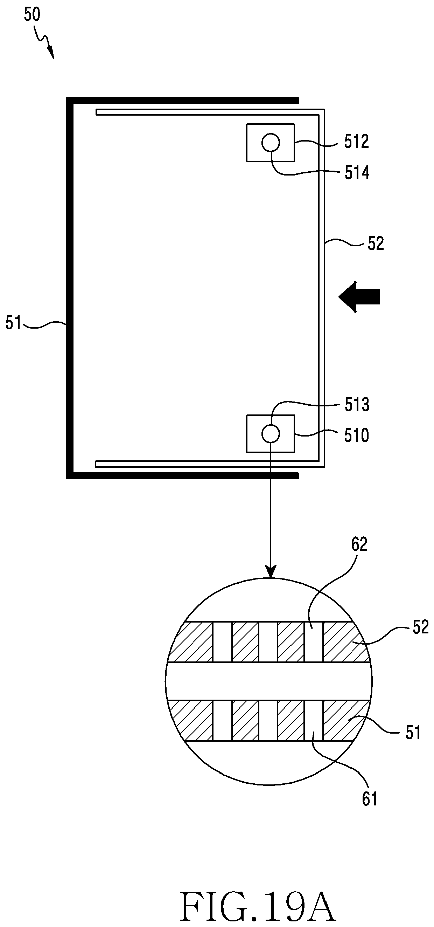

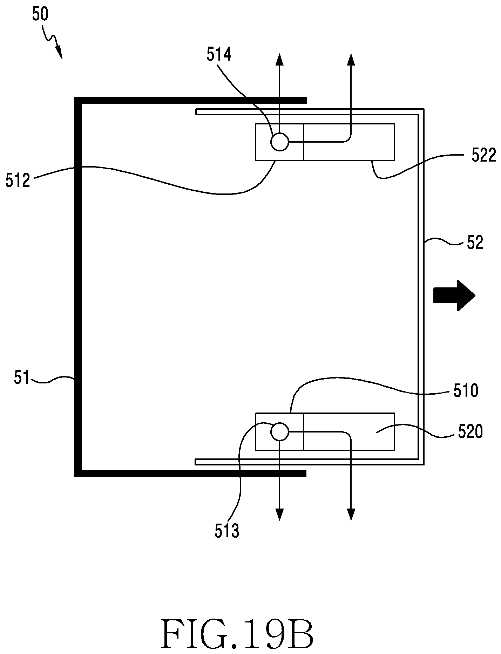

Referring to FIG. 19A and FIG. 19B, according to an embodiment, the first speaker hole 61 may be formed in the first side surface 51c of the main body housing 51, and the second speaker hole 62 may be formed in the second side 52c of the support frame 52. According to an embodiment, if the support frame 52 is closed in the main body housing 51, the second speaker hole 62 may face the first speaker hole 61.

According to an embodiment, the support frame 52 may further include duct structures 520 and 522 extending from the speakers 510 and 512 disposed in the main body housing 51 to the second speaker hole 62. According to an embodiment, if the support frame 52 is fully opened from the main body housing 51, a resonance chamber volume of each speaker 510 and 512 increases, that is, the duct structures 520 and 522 are added, and accordingly the sound produced from each speaker 510 and 512 may be emitted to the outside of the main body housing 51 through the first speaker hole 61 and to the outside of the support frame 52 through the duct structures 510 and 512 and the second speaker hole 62. If the support frame 52 is fully open in the main body housing 51, the resonance chamber volume of each speaker 510 and 512 increases, and the sound path, which is not straight but curved, may be effective in high-band sound reinforcement. Reference numerals 513 and 514 each may refer to a speaker vibrating unit.

Various embodiments of the present disclosure disclosed in the present specification and the drawings are merely presented as specific examples to easily explain the technical content of the present disclosure and to help the understanding of the present disclosure, and are not intended to limit the scope of the present disclosure.

## Claims

1. An electronic device (10) comprising:
a main body housing (11) comprising a first plate (110) disposed to face a first direction, a second plate (112) disposed to face a second direction which is opposite to the first direction, and a plurality of side members (11a, 11b, 114) disposed between the first plate (110) and the second plate (112), the plurality of side members including a first side member (11a), a second side member(11b), and a third side member (114);
a support frame (12) disposed to overlap at least a partial area of the first plate (110), and sliding in a direction away from the main body housing (11) or sliding in a direction toward the main body housing (11);
a flexible display (20) disposed on at least a part of the main body housing (11), connected to the support frame (12), and extending a display area according to movement of the support frame (12), and
at least one or more speakers (115, 116) disposed in the main body housing (11), and emitting sound toward the second plate (112) and the side members (11a, 11b, 114),
wherein at least one or more first speaker holes (h1) for emitting the sound of the speaker are formed in the first side member (11a),
wherein at least one or more second speaker holes (h2) for emitting the sound of the speaker are formed in the second side member (11b) and
wherein at least one or more third speaker holes (30) for emitting the sound of the speaker are formed in a first area (113) of the second plate (112),
wherein the at least one or more third speaker holes (30) are configured to be opened and closed by a first portion (121, 122) of the support frame (12) according to the movement of the support frame (12).

2. The electronic device of claim 1, wherein the flexible display (20) comprises
a first display area (210) exposed in the main body housing (11) if the support frame (12) is closed; and
a second display area (212) additionally extended and exposed from the first display area (210) if the support frame (12) is opened in the main body housing (11).

3. The electronic device of any of the claims 1 to 2, wherein the speaker (115, 116) is a two-way speaker, and a speaker vibrating unit is disposed to face the second direction.

4. The electronic device of any of the claims 1 to 3, wherein the speaker (115) comprises
a first surface (115a) facing the first direction;
a second surface (115b) facing the second direction;
a side surface (115c);
at least one or more first openings (1151) for emitting the sound of the speaker; and
at least one or more second openings (1152) for emitting the sound of the speaker in the second direction.

5. The electronic device of any of the claim 4, wherein the first opening (1151) is in a duct structure, and is formed as a pair.

6. The electronic device of any of the claims 1 to 5, wherein the sound emitted from the speaker (115) is emitted through the first opening (1151) and the at least one or more first speaker holes (h1) and the at least one or more second speaker holes (h2), and
wherein the sound emitted from the speaker (115) is emitted in the second direction through the second opening (1152) and the at least one or more third speaker holes (30).

7. The electronic device of any of the claims 1 to 6, wherein, if the support frame (12) is closed in the main body housing (11), a first area (113) in which the at least one or more third speaker holes (30) is formed and the first portion (121) of the support frame (12) are disposed to overlap, and
the first area (113) is closed by the first portion (121), and the first area (113) is opened if the support frame (12) is opened from the main body housing (11).

8. The electronic device of claim 7, wherein the first area (113) is recessed from the second plate (112).

9. The electronic device of claim 7, wherein the at least one or more third speaker holes (30) are disposed as a pair on the second plate (112), and are formed symmetrically.

10. The electronic device of any of the claims 1 to 9, wherein the support frame (12) comprises a receiving portion (120) comprising a plurality of electronic components, protruding in the second direction, and the first portion (124) protrudes from the receiving portion (120) to the main body housing (11).

11. The electronic device of any one of the claims 1 to 11, wherein the direction of the sound emitted through the at least one or more third speaker holes (30) is perpendicular to a sliding direction in which the support frame (12) is opened.

12. The electronic device of claim 1, wherein the third side member (114) extends from the second plate (112) and is interposed between the first plate (110) and the second plate (112),
the at least one or more fourth speaker holes (32, 401, 411, 412) for emitting the sound of the speaker (116) are formed in the third side member (114),
wherein the at least one or more fourth speaker holes (32, 401, 411, 412) are configured to be opened and closed by a portion (124) of the support frame (12) according to the movement of the support frame (12).

13. The electronic device of any of claims 1 to 3 and 12, wherein the speaker (116) comprises
a first surface (116a) facing the first direction;
a second surface (116b) facing the second direction;
a plurality of side surfaces (116c, 116d);
at least one or more first openings (1161) for emitting the sound of the speaker (116) ; and
at least one or more second openings (1162) for emitting the sound of the speaker (116).

14. The electronic device of any of the claims 1 to 3 and 12 to 13, wherein the first and second openings (1161, 1162) each are formed in a duct structure (520, 522).

15. The electronic device of any of the claims 1 to 3 and 12 to 14, wherein the sound emitted from the speaker (116) is emitted through the first opening (1161) and the at least one or more first speaker holes (h1) and the at least one or more second speaker holes (h2), and
wherein the sound emitted from the speaker (116) is emitted through the second opening (1162) and the at least one or more fourth speaker holes (32, 401, 411, 412).

## Patentansprüche

1. Elektronische Vorrichtung (10), umfassend:
ein Hauptkörpergehäuse (11), umfassend eine erste Platte (110), die so angeordnet ist, dass sie einer ersten Richtung zugewandt ist, eine zweite Platte (112), die so angeordnet ist, dass sie einer zweiten Richtung zugewandt ist, die der ersten Richtung entgegengesetzt ist, und eine Vielzahl von Seitenelementen (11a, 11b, 114), die zwischen der ersten Platte (110) und der zweiten Platte (112) angeordnet sind, wobei die Vielzahl von Seitenelementen ein erstes Seitenelement (11a), ein zweites Seitenelement (11b) und ein drittes Seitenelement (114) beinhaltet;
einen Stützrahmen (12), der so angeordnet ist, dass er mindestens einen Teilbereich der ersten Platte (110) überlappt und in einer Richtung weg von dem Hauptkörpergehäuse (11) oder in einer Richtung zu dem Hauptkörpergehäuse (11) gleitet;
eine flexible Anzeige (20), die an mindestens einem Teil des Hauptkörpergehäuses (11) angeordnet ist, mit dem Stützrahmen (12) verbunden ist und einen Anzeigebereich entsprechend der Bewegung des Stützrahmens (12) erweitert, und
mindestens einen oder mehrere Lautsprecher (115, 116), die in dem Hauptkörpergehäuse (11) angeordnet sind und Ton in Richtung der zweiten Platte (112) und der Seitenelemente (11a, 11b, 114) emittiert,
wobei mindestens ein oder mehrere erste Lautsprecherlöcher (h1) zum Emittieren des Lautsprechertons in dem ersten Seitenelement (11a) ausgebildet sind,
wobei mindestens ein oder mehrere zweite Lautsprecherlöcher (h2) zum Emittieren des Lautsprechertons in dem zweiten Seitenelement (11b) ausgebildet sind, und
wobei mindestens ein oder mehrere dritte Lautsprecherlöcher (30) zum Emittieren des Lautsprechertons in einem ersten Bereich (113) der zweiten Platte (112) ausgebildet sind,
wobei das mindestens eine oder mehrere dritte Lautsprecherlöcher (30) so konfiguriert sind, dass sie durch einen ersten Abschnitt (121, 122) des Stützrahmens (12) entsprechend der Bewegung des Stützrahmens (12) geöffnet und geschlossen werden.

2. Elektronische Vorrichtung nach Anspruch 1, wobei die flexible Anzeige (20) Folgendes umfasst
einen ersten Anzeigebereich (210), der in dem Hauptkörpergehäuse (11) freiliegt, wenn der Stützrahmen (12) geschlossen wird; und
einen zweiten Anzeigebereich (212), der sich zusätzlich zu dem ersten Anzeigebereich (210) erstreckt und freiliegt, wenn der Stützrahmen (12) in dem Hauptkörpergehäuse (11) geöffnet wird.

3. Elektronische Vorrichtung nach einem der Ansprüche 1 bis 2, wobei der Lautsprecher (115, 116) ein Zwei-Wege-Lautsprecher ist und eine Lautsprechervibrationseinheit so angeordnet ist, dass sie der zweiten Richtung zugewandt ist.

4. Elektronische Vorrichtung nach einem der Ansprüche 1 bis 3, wobei der Lautsprecher (115) Folgendes umfasst
eine erste Oberfläche (115a), die der ersten Richtung zugewandt ist;
eine zweite Oberfläche (115b), die der zweiten Richtung zugewandt ist;
eine Seitenfläche (115c);
mindestens eine oder mehrere erste Öffnungen (1151) zum Emittieren des Lautsprechertons; und
mindestens eine oder mehrere zweite Öffnungen (1152) zum Emittieren des Lautsprechertons in die zweite Richtung.

5. Elektronische Vorrichtung nach Ansprüche 4, wobei die erste Öffnung (1151) in einer Kanalstruktur liegt und als Paar ausgebildet ist.

6. Elektronische Vorrichtung nach einem der Ansprüche 1 bis 5, wobei der Ton, der von dem Lautsprecher (115) emittiert wird, durch die erste Öffnung (1151) und das mindestens eine oder mehrere erste Lautsprecherlöcher (h1) und das mindestens eine oder mehrere zweite Lautsprecherlöcher (h2) emittiert wird, und
wobei der Ton, der von dem Lautsprecher (115) emittiert wird, in der zweiten Richtung durch die zweite Öffnung (1152) und das mindestens eine oder mehrere dritte Lautsprecherlöcher (30) emittiert wird.

7. Elektronische Vorrichtung nach einem der Ansprüche 1 bis 6, wobei, wenn der Stützrahmen (12) in dem Hauptkörpergehäuse (11) geschlossen wird, ein erster Bereich (113), in dem das mindestens eine oder mehrere dritte Lautsprecherlöcher (30) ausgebildet sind, und der erste Abschnitt (121) des Stützrahmens (12) überlappend angeordnet sind, und
der erste Bereich (113) durch den ersten Abschnitt (121) geschlossen wird und der erste Bereich (113) geöffnet wird, wenn der Stützrahmen (12) von dem Hauptkörpergehäuse (11) geöffnet wird.

8. Elektronische Vorrichtung nach Anspruch 7, wobei der erste Bereich (113) von der zweiten Platte (112) zurückgesetzt ist.

9. Elektronische Vorrichtung nach Anspruch 7, wobei das mindestens eine oder mehrere dritte Lautsprecherlöcher (30) als Paar auf der zweiten Platte (112) angeordnet und symmetrisch ausgebildet sind.

10. Elektronische Vorrichtung nach einem der Ansprüche 1 bis 9, wobei der Stützrahmen (12) einen Aufnahmeabschnitt (120) umfasst, umfassend eine Vielzahl von elektronischen Komponenten, die in die zweite Richtung vorstehen, und der erste Abschnitt (124) von dem Aufnahmeabschnitt (120) zu dem Hauptkörpergehäuse (11) vorsteht.

11. Elektronische Vorrichtung nach einem der Ansprüche 1 bis 11, wobei die Richtung des Tons, der durch das mindestens eine oder mehrere dritte Lautsprecherlöcher (30) emittiert wird, senkrecht zu einer Gleitrichtung verläuft, in der der Stützrahmen (12) geöffnet wird.

12. Elektronische Vorrichtung nach Anspruch 1, wobei sich das dritte Seitenelement (114) von der zweiten Platte (112) erstreckt und zwischen der ersten Platte (110) und der zweiten Platte (112) angeordnet ist,
das mindestens eine oder mehrere vierte Lautsprecherlöcher (32, 401, 411, 412) zum Emittieren des Lautsprechertons (116) in dem dritten Seitenelement (114) ausgebildet sind,
wobei das mindestens eine oder mehrere vierte Lautsprecherlöcher (32, 401, 411, 412) so konfiguriert sind, dass sie durch einen Abschnitt (124) des Stützrahmens (12) entsprechend der Bewegung des Stützrahmens (12) geöffnet und geschlossen werden.

13. Elektronische Vorrichtung nach einem der Ansprüche 1 bis 3 und 12, wobei der Lautsprecher (116) Folgendes umfasst
eine erste Oberfläche (116a), die der ersten Richtung zugewandt ist;
eine zweite Oberfläche (116b), die der zweiten Richtung zugewandt ist;
eine Vielzahl von Seitenflächen (116c, 116d);
mindestens eine oder mehrere erste Öffnungen (1161) zum Emittieren des Lautsprechertons (116); und
mindestens eine oder mehrere zweite Öffnungen (1162) zum Emittieren des Lautsprechertons (116).

14. Elektronische Vorrichtung nach einem der Ansprüche 1 bis 3 und 12 bis 13, wobei die erste und zweite Öffnung (1161, 1162) jeweils in einer Kanalstruktur (520, 522) ausgebildet sind.

15. Elektronische Vorrichtung nach einem der Ansprüche 1 bis 3 und 12 bis 14, wobei der Ton, der von dem Lautsprecher (116) emittiert wird, durch die erste Öffnung (1161) und das mindestens eine oder mehrere erste Lautsprecherlöcher (h1) und das mindestens eine oder mehrere zweite Lautsprecherlöcher (h2) emittiert wird, und
wobei der Ton, der von dem Lautsprecher (116) emittiert wird, durch die zweite Öffnung (1162) und das mindestens eine oder mehrere vierte Lautsprecherlöcher (32, 401, 411, 412) emittiert wird.

## Revendications

1. Dispositif électronique (10) comprenant :
un boîtier de corps principal (11) comprenant une première plaque (110) disposée pour faire face à une première direction, une deuxième plaque (112) disposée pour faire face à une deuxième direction qui est opposée à la première direction, et une pluralité d'éléments latéraux (11a, 11b, 114) disposés entre la première plaque (110) et la deuxième plaque (112), la pluralité d'éléments latéraux incluant un premier élément latéral (11a), un deuxième élément latéral (11b) et un troisième élément latéral (114) ;
un cadre de support (12) disposé pour chevaucher au moins une zone partielle de la première plaque (110), et coulissant dans une direction à l'écart du boîtier de corps principal (11) ou coulissant dans une direction vers le boîtier de corps principal (11) ;
un écran souple (20) disposé sur au moins une partie du boîtier de corps principal (11), relié au cadre de support (12), et étendant une zone d'affichage selon un mouvement du cadre de support (12), et
au moins un ou plusieurs haut-parleurs (115, 116) disposés dans le boîtier de corps principal (11), et émettant un son vers la deuxième plaque (112) et les éléments latéraux (11a, 11b, 114),
dans lequel au moins un ou plusieurs premiers trous de haut-parleur (h1) pour émettre le son du haut-parleur sont formés dans le premier élément latéral (11a),
dans lequel au moins un ou plusieurs deuxièmes trous de haut-parleur (h2) pour émettre le son du haut-parleur sont formés dans le deuxième élément latéral (11b) et
dans lequel au moins un ou plusieurs troisièmes trous de haut-parleur (30) pour émettre le son du haut-parleur sont formés dans la première zone (113) de la deuxième plaque (112),
dans lequel l'au moins un ou plusieurs troisièmes trous de haut-parleur (30) sont configurés pour être ouverts et fermés par une première partie (121, 122) du cadre de support (12) selon le mouvement du cadre de support (12).

2. Dispositif électronique selon la revendication 1, dans lequel l'écran souple (20) comprend
une première zone d'affichage (210) exposée dans le boîtier de corps principal (11) si le cadre de support (12) est fermé ; et
une deuxième zone d'affichage (212) étendue et exposée davantage à partir de la première zone d'affichage (210) si le cadre de support (12) est ouvert dans le boîtier de corps principal (11).

3. Dispositif électronique selon l'une quelconque des revendications 1 et 2, dans lequel le haut-parleur (115, 116) est un haut-parleur bidirectionnel, et une unité vibrante de haut-parleur est disposée pour faire face à la deuxième direction.

4. Dispositif électronique selon l'une quelconque des revendications 1 à 3, dans lequel le haut-parleur (115) comprend
une première surface (115a) faisant face à la première direction ;
une deuxième surface (115b) faisant face à la deuxième direction ;
une surface latérale (115c) ;
au moins une ou plusieurs premières ouvertures (1151) pour émettre le son du haut-parleur ; et
au moins une ou plusieurs deuxièmes ouvertures (1152) pour émettre le son du haut-parleur dans la deuxième direction.

5. Dispositif électronique selon la revendication 4, dans lequel la première ouverture (1151) est dans une structure de conduit, et est constituée sous forme de paire.

6. Dispositif électronique selon l'une quelconque des revendications 1 à 5, dans lequel le son émis depuis le haut-parleur (115) est émis à travers la première ouverture (1151) et l'au moins un ou plusieurs premiers trous de haut-parleur (h1) et l'au moins un ou plusieurs deuxièmes trous de haut-parleur (h2), et
dans lequel le son émis depuis le haut-parleur (115) est émis dans la deuxième direction à travers la deuxième ouverture (1152) et l'au moins un ou plusieurs troisièmes trous de haut-parleur (30).

7. Dispositif électronique selon l'une quelconque des revendications 1 à 6, dans lequel, si le cadre de support (12) est fermé dans le boîtier de corps principal (11), une première zone (113) dans laquelle l'au moins un ou plusieurs troisièmes trous de haut-parleur (30) sont formés et la première partie (121) du cadre de support (12) sont disposées pour se chevaucher, et
la première zone (113) est fermée par la première partie (121), et la première zone (113) est ouverte si le cadre de support (12) est ouvert depuis le boîtier de corps principal (11).

8. Dispositif électronique selon la revendication 7, dans lequel la première zone (113) est évidée par rapport à la deuxième plaque (112).

9. Dispositif électronique selon la revendication 7, dans lequel l'au moins un ou plusieurs troisièmes trous de haut-parleur (30) sont disposés sous forme d'une paire sur la deuxième plaque (112), et sont formés symétriquement.

10. Dispositif électronique selon l'une quelconque des revendications 1 à 9, dans lequel le cadre de support (12) comprend une partie de réception (120) comprenant une pluralité de composants électroniques, faisant saillie dans la deuxième direction, et la première partie (124) fait saillie de la partie de réception (120) vers le boîtier de corps principal (11).

11. Dispositif électronique selon l'une quelconque des revendications 1 à 11, dans lequel la direction du son émis à travers l'au moins un ou plusieurs troisièmes trous de haut-parleur (30) est perpendiculaire à une direction de coulissement dans laquelle le cadre de support (12) est ouvert.

12. Dispositif électronique selon la revendication 1, dans lequel le troisième élément latéral (114) s'étend depuis la deuxième plaque (112) et est interposé entre la première plaque (110) et la deuxième plaque (112),
l'au moins un ou plusieurs quatrièmes trous de haut-parleurs (32, 401, 411, 412) pour émettre le son du haut-parleur (116) sont formés dans le troisième élément latéral (114),
dans lequel l'au moins un ou plusieurs quatrièmes trous de haut-parleur (32, 401, 411, 412) sont configurés pour être ouverts et fermés par une partie (124) du cadre de support (12) selon le mouvement du cadre de support (12).

13. Dispositif électronique selon l'une quelconque des revendications 1 à 3 et 12, dans lequel le haut-parleur (116) comprend
une première surface (116a) faisant face à la première direction ;
une deuxième surface (116b) faisant face à la deuxième direction ;
une pluralité de surfaces latérales (116c, 116d) ;
au moins une ou plusieurs premières ouvertures (1161) pour émettre le son du haut-parleur (116) ; et
au moins une ou plusieurs deuxièmes ouvertures (1162) pour émettre le son du haut-parleur (116).

14. Dispositif électronique selon l'une quelconque des revendications 1 à 3 et 12 à 13, dans lequel les premières et deuxièmes ouvertures (1161, 1162) sont chacune formées dans une structure de conduit (520, 522).

15. Dispositif électronique selon l'une quelconque des revendications 1 à 3 et 12 à 14, dans lequel le son émis depuis le haut-parleur (116) est émis à travers la première ouverture (1161) et l'au moins un ou plusieurs premiers trous de haut-parleur (h1) et l'au moins un ou plusieurs deuxièmes trous de haut-parleur (h2), et
dans lequel le son émis depuis le haut-parleur (116) est émis à travers la deuxième ouverture (1162) et l'au moins un ou plusieurs quatrièmes trous de haut-parleur (32, 401, 411, 412).
